# EUROPÄISCHE PATENTANMELDUNG

(11) **EP 2 683 188 A1**
(43) Veröffentlichungstag der Anmeldung: **08.01.2014**
(21) Anmeldenummer: 12175065.7
(22) Anmeldetag: 05.07.2012
(51) Int. Cl.: H04W 12/06, H04W 88/10

(54) **Verfahren zum Steuern und Verwalten einer drahtlosen Verbindung zur Datenkommunikation zwischen einem mobilen Gerät und einem breitbandigen Funknetz**

(71) Anmelder: Orderman GmbH, 5023 Salzburg (AT)
(72) Erfinder: Bederov, Denis, 10789 Berlin (DE)
(74) Vertreter: MacLeod, Roderick William

(57) **Zusammenfassung**

Es wird ein Verfahren zum Steuern und Verwalten einer drahtlosen Verbindung zur Datenkommunikation zwischen einem mobilen Gerät und einem breitbandigen Funknetzvorgeschlagen, im Rahmen dessen die Anmeldung und die Authentisierung des mobilen Gerätes an den Basisstationen des breitbandigen Funknetzes über ein schmalbandiges Funknetz mit geringerer Datenrate und größerer Reichweite als das breitbandige Funknetz erfolgt.

## Beschreibung

Die vorliegende Erfindung bezieht sich auf ein Verfahren zum Steuern und Verwalten einer drahtlosen Verbindung zur Datenkommunikation zwischen einem mobilen Gerät und einem breitbandigen Funknetz gemäß dem Oberbegriff des Patentanspruchs 1.

Aus dem Stand der Technik ist bekannt, mobile Geräte zur Datenkommunikation mit Funkeinheiten für unterschiedliche Funknetze mit unterschiedlichen Funkstandards auszurüsten, wodurch diese Geräte unterschiedliche Funkstandards unterstützen können.

Unterschiedliche Funkstandards weisen unterschiedliche Güteparameter auf, wie beispielsweise Reichweite, Datenrate, etc. In der Regel weisen Funkstandards, die eine hohe Reichweite gewährleisten, eine geringe Bandbreite und somit eine geringe Übertragungsgeschwindigkeit bzw. Datenrate auf, wobei Funkstandards mit einer hohen Bandbreite und somit mit einer hohen Übertragungsgeschwindigkeit bzw. Datenrate eine im Vergleich zu schmalbandigen Funkstandards geringere Reichweite und somit Abdeckung aufweisen.

Breitbandig steht dabei für die Übertragungen mit höherer Datenrate, schmalbandig für die Übertragungen mit eher niedriger Datenrate. Dieser umgangssprachlichen Definition liegt die Beobachtung zu Grunde, dass man für die Übertragung von mehr Daten in der gleichen Zeiteinheit tendenziell auch mehr Platz im Spektrum verbraucht. Ein schmalbandiges Funknetz (d.h. ein Funknetz basierend auf einem schmalbandigen Funkstandard) im Sinne der Erfindung weist eine höhere Reichweite und eine geringere Datenrate als ein breitbandiges Funknetz auf.

Um bei Funkstandards mit hoher Bandbreite eine gute Abdeckung zu gewährleisten, sind mehrere Basisstationen bzw. kleinere Zellen erforderlich. Durch die geringe Reichweite von breitbandigen Systemen wird gewährleistet, dass weniger Störungen die Funkstrecke belasten, wodurch Übertragungsfehler weitgehend vermieden werden.

Für den Fall, dass an einem Ort eine drahtlose Verbindung zwischen einem mobilen Gerät und Funknetzen über unterschiedliche Funkstandards möglich ist, wird nach dem Stand der Technik in Abhängigkeit von Anforderungen bezüglich der Abdeckung, der Übertragungskosten, der Signalgüte, etc. zwischen den unterschiedlichen Funkstandards hart umgeschaltet. Hierbei wird die bestehende Verbindung über einen Funkstandard deaktiviert, während eine andere Verbindung über einen anderen Funkstandard aktiviert wird.

Dies kann in nachteiliger Weise dazu führen, dass bei der Umschaltung von einem Funkstandard auf einen anderen Funkstandard für eine gewisse Zeit keine drahtlose Verbindung vorhanden ist, so dass Totzeiten entstehen, da das mobile Gerät erst beim zu verwendenden Funknetz eine Anmeldung und/oder Authentisierung durchführen muss.

Ferner ist bekannt, bei Verfügbarkeit von mehreren Funknetzen mit unterschiedlichen Funkstandards eine bestehende Verbindung über einen Funkstandard erst dann zu deaktivieren, wenn eine andere Verbindung über einen anderen Funkstandard aufgebaut ist. Da jedoch der Zeitpunkt des Abreißens der bestehenden Verbindung nicht exakt bestimmt werden kann, kann diese Vorgehensweise ebenfalls in Totzeiten resultieren.

Des Weiteren ist aufgrund der kurzen Reichweite von breitbandigen Funkstandards erforderlich, die Basisstationen eines breitbandigen Funksystems, beispielsweise eines WLAN-Systems, oft zu wechseln, was in nachteiliger Weise einerseits in einer Überlappung der Frequenzbereiche der Basisstationen resultiert, was zu Störungen führen kann, und zum anderen in Totzeiten resultiert, da das mobile Gerät erst nach einer neuen Basisstation suchen und eine Anmeldung und/oder Authentisierung durchführen muss, wenn der Kontakt zur vorherigen Basisstation bereits unterbrochen ist.

Der vorliegenden Erfindung liegt die Aufgabe zugrunde, ein Verfahren zum Steuern und Verwalten einer drahtlosen Verbindung zur Datenkommunikation zwischen einem mobilen Gerät und einem breitbandigen Funknetz anzugeben, durch dessen Durchführung die erwähnten und aus dem Stand der Technik bekannten Totzeiten bei der Datenübertragung während eines Basisstationwechsels vermieden werden. Des Weiteren soll die Sicherheit der Datenübertragung erhöht werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein Verfahren zum Steuern und Verwalten einer drahtlosen Verbindung zur Datenkommunikation zwischen einem mobilen Gerät und einem breitbandigen Funknetz vorgeschlagen, im Rahmen dessen die Anmeldung und für den Fall, dass eine Authentisierung erforderlich ist, die Authentisierung des mobilen Gerätes an den Basisstationen des breitbandigen Funknetzes über ein schmalbandiges Funknetz mit geringerer Datenrate und größerer Reichweite als das breitbandige Funknetz erfolgt. Hierbei erfolgen der erforderliche Antennen-/Kanalscan und die Anmeldung und Authentisierung des mobilen Gerätes bei den Basisstationen des breitbandigen Funknetzes vorab über das schmalbandige Funknetz. Beispielsweise können Frequenzlisten, erforderliche Spreizcodes/Modulationsparameter, temporäre Nutzer-lDs, etc. über das schmalbandige Funknetz ausgetauscht werden.

Hierbei wird vorausgesetzt, dass das mobile Gerät beim schmalbandigen Funknetz bereits angemeldet ist, so dass eine Verbindung zur Datenkommunikation zwischen dem mobilen Gerät und dem schmalbandigen Funknetz besteht.

Ein beispielhafte Sequenz für eine solche Authentisierung ist im Folgenden dargestellt:
Auf dem schmalbandigen Funknetz geschehen die folgenden Schritte:
   1. Das mobile Gerät sendet eine Authentisierungsanfrage an die Basisstation
   2. Die Basisstation fordert ein Passwort vom mobilen Gerät an
   3. Das mobile Gerät sendet das Passwort an die Basisstation
   4. Die Basisstation überprüft das Passwort
   5. Die Basisstation generiert diverse Informationen, wie etwa eine Zufallsnummer zum Identifizieren der nachfolgenden gültigen Kommunikation (Session-Token) oder die Nummer des zu verwendenden Funkkanals oder die Werte der physikalischen Modulationsparameter und sendet diese an das mobile Gerät
   6. Das mobile Gerät verwendet diese Parameter zur Konfiguration der nachfolgenden breitbandigen Kommunikation, d.h. der Datenkommunikation über das breitbandige Funknetz

Anschließend erfolgt die weitere Kommunikation auf dem breitbandigen Funknetz. Insbesondere verwendet der Funkverkehr den ebenfalls in Schritt 5 übermittelten Funkkanal sowie das in Schritt 5 übermittelte Session-Token.

Diese beispielhafte Sequenz dient lediglich der vereinfachten Darstellung einer solchen schmalbandigen Authentisierung mit nachfolgender breitbandiger Kommunikation. Das erfindungsgemäße Verfahren deckt sämtliche Formen der Authentisierung in einem breitbandigen Funknetz über ein schmalbandiges Funknetz ab.

Durch die erfindungsgemäße Konzeption wird der Vorteil erzielt, dass das mobile Gerät in jeder einer Basisstation zugeordneten Zelle des breitbandigen Funknetzes bereits erwartet wird, so dass keine Totzeiten entstehen, wodurch die Datenübertragung in vorteilhafter Weise ohne Verzögerung durchgeführt werden kann.

Beispielsweise kann das breitbandige Funknetz fünf Basisstationen aufweisen, die über lediglich eine Basisstation des schmalbandigen Funknetzes abgedeckt werden.

Im Rahmen einer Weiterbildung der Erfindung wird zudem vorgeschlagen, eine Steigerung der Gesamtsicherheit dadurch zu erzielen, dass die "key-exchange" Prozedur für die Cryptoschlüssel, die für die Verschlüsselung der Übertragung über das breitbandige Funknetz erforderlich sind, über das schmalbandige Funknetz durchzuführen.

Ein beispielhafte Sequenz für eine solche Authentisierung ist im Folgenden dargestellt:
Auf dem schmalbandigen Funknetz geschehen die folgenden Schritte:
   1. Das mobile Gerät sendet eine Authentisierungsanfrage an die Basisstation
   2. Die Basisstation fordert ein Passwort vom mobilen Gerät an
   3. Das mobile Gerät sendet das Passwort an die Basisstation
   4. Die Basisstation überprüft das Passwort
   5. Die Basisstation generiert eine Kryptoinformation für das breitbandige Funknetz, zusammen mit anderen Informationen wie eine Zufallsnummer zum Identifizieren der nachfolgenden gültigen Kommunikation (Session-Token) oder die Nummer des zu verwendenden Funkkanals oder die Werte der physikalischen Modulationsparameter und sendet diese an das mobile Gerät
   6. Das mobile Gerät verwendet diese Parameter zur Konfiguration der nachfolgenden breitbandigen Kommunikation

Ab nun erfolgt die weitere Kommunikation auf dem breitbandigen Funknetz. Insbesondere sind die zu übertragenden Daten mit der in Schritt 5 übermittelten Kryptoinformation verschlüsselt, und der Funkverkehr findet auf dem ebenfalls in Schritt 5 übermittelten Funkkanal statt.

Diese beispielhafte Sequenz dient lediglich der vereinfachten Darstellung einer solchen schmalbandigen Authentisierung mit nachfolgender breitbandiger Kommunikation. Das erfindungsgemäße Verfahren deckt sämtliche Formen der Authentisierung in einem breitbandigen Funknetz über ein schmalbandiges Funknetz ab.

Demnach werden die Schlüssel für die verschlüsselte Datenübertagung über das breitbandige Funknetz, welches beispielsweise ein WLAN-Netz sein kann, über das schmalbandige Funknetz ausgetauscht, wobei die verschlüsselte Datenübertragung über das breitbandige Funknetz erfolgt. In diesem Zusammenhang stellt das schmalbandige Funknetz einen unabhängigen Datenübertragungskanal dar, so dass durch die Übertragung der Schlüssel über das schmalbandige Funknetz und die Datenübertragung über das breitbandige Funknetz eine Steigerung der Sicherheit erzielbar ist.

Im Rahmen einer Weiterbildung des erfindungsgemäßen Verfahrens, kann der zu übertragende Datenstrom aufgesplittet werden. Hierbei werden Datenfragmente der über das breitbandige Funknetz zu übertragenden Daten ausgeschnitten und über das langsamere, schmalbandige Funknetz übertragen, wobei die von beiden Funknetzen übertragenen Daten beim Empfänger wieder zusammengesetzt werden. Das korrekte Zusammensetzen dieser Daten basiert auf einer entsprechenden Flusskontrolle. Ein konkretes Beispiel für eine solche Flusskontrolle ist, dass jedes Datenpaket vor dem Versenden eine eindeutige, aufsteigende Paketnummer erhält, unabhängig davon, ob das Datenpaket auf dem breit- oder dem schmalbandigen Funkkanal übertragen wird. Der Empfänger sammelt die Datenpakete von beiden Funkkanälen und ordnet sie gemäß ihrer aufsteigenden Paketnummer wieder zu einem gesamten, korrekten Datenstrom an.

Des Weiteren kann im Rahmen der Erfindung vorgesehen sein, dass über das schmalbandige Funknetz Steuerungsinformationen übertragen werden, die der Übertragung der eigentlichen zu übertragenden Daten über das breitbandige Funknetz dienen. Dadurch wird eine schnellere Übertragung erzielt, da die Steuerungsinformationen gleichzeitig mit den zu übertragenden Daten übermittelt werden.

Ferner kann gemäß der vorliegenden Erfindung die Performance des breitbandigen Funknetzes über laufende, in vorgegebenen Zeitabständen durchgeführten Messungen anhand eines Vergleichs mit der im Wesentlichen konstanten Performance des schmalbandigen Funknetzes ermittelt werden, wobei für den Fall, dass die Performance der Funkstrecke des breitbandigen Funknetzes einen vorgegebenen Schwellenwert unterschreitet, die Datenübertragung sämtlicher zu übermittelnden Daten oder eines Teils der zu übermittelnden Daten über das schmalbandige Funknetz erfolgt, bis die Performance des breitbandigen Funknetzes einen vorgegebenen Schwellenwert überschreitet. Im Rahmen einer Variante der Erfindung werden für den Fall einer schlechten Performance des breitbandigen Funknetzes lediglich die nicht sicherheitskritischen Daten über das schmalbandige Funknetz übertragen.

Für den Fall eines Ausfalls oder des Nichtvorhandenseins des breitbandigen Funknetzes wird die gesamte Datenübertragung über das schmalbandige Funknetz abgewickelt, wodurch die Ausfallsicherheit erhöht wird.

Durch die erfindungsgemäße Konzeption wird ein breitbandiges Funknetz mit einem schmalbandigen Funknetz kombiniert, wodurch sich mehr Vorteile als bei der wahlweise ausschließlichen Nutzung eines dieser beiden Netze ergeben.

Das breitbandige Funknetz ist vorzugsweise als WLAN-Funknetz (nach einem der IEEE802.11 Standards) ausgeführt, wobei das schmalbandige Funknetz vorzugsweise als Funknetz über das ISM-Band (Industrial, Scientific and Medical band), vorzugsweise jedoch in einer Frequenz von 433 oder 902 MHz ausgeführt ist.

Die Erfindung wird im Folgenden anhand der beigefügten Figuren beispielhaft näher erläutert. Es zeigen:

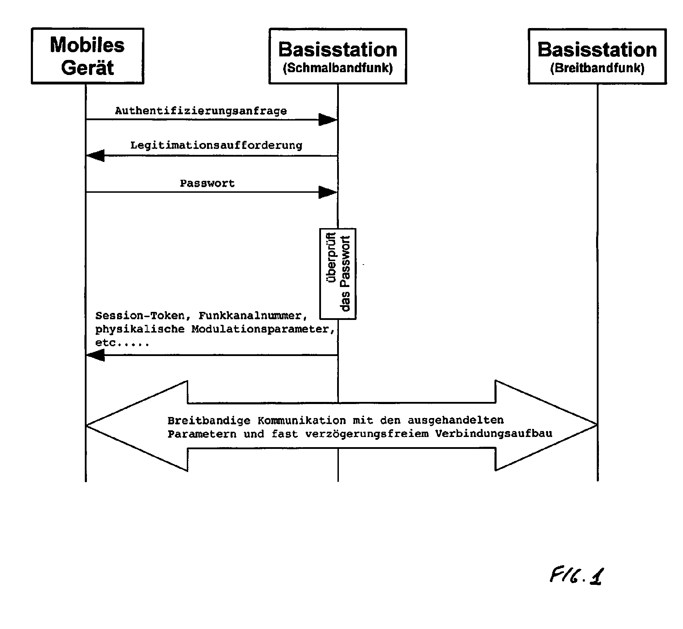

Figur 1: Ein Diagramm zur Veranschaulichung der Authentisierung eines mobilen Gerätes an einer Basisstation eines breitbandigen Funknetzes über ein schmalbandiges Funknetz mit geringerer Datenrade und größerer Reichweite als das breitbandige Funknetz gemäß einer Ausgestaltung der Erfindung; und

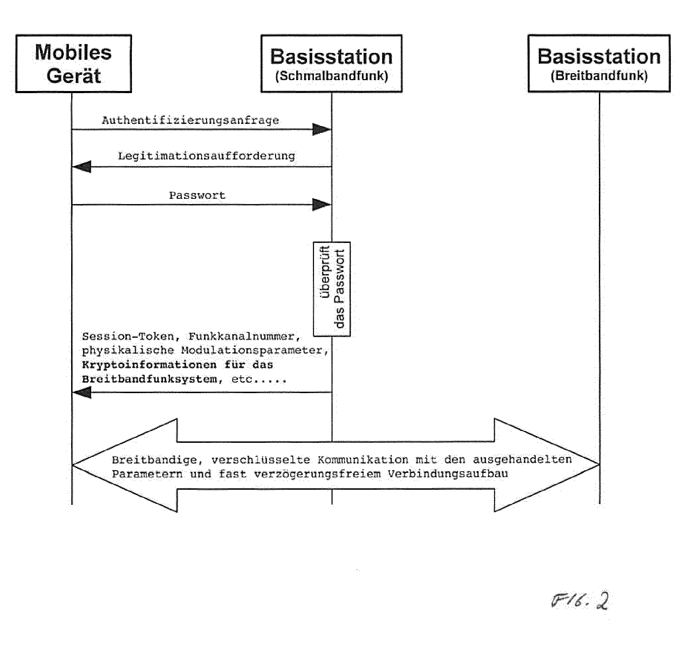

Figur 2: Ein Diagramm zur Veranschaulichung der Authentisierung eines mobilen Gerätes an einer Basisstation eines breitbandigen Funknetzes über ein schmalbandiges Funknetz mit geringerer Datenrade und größerer Reichweite als das breitbandige Funknetz gemäß einer weitere vorteilhaften Ausgestaltung der Erfindung, wobei zur Erhöhung der Sicherheit die "key-exchange" Prozedur für die Kryptoschlüssel, die für die Verschlüsselung der Übertragung über das breitbandige Funknetz erforderlich sind, über das schmalbandige Funknetz durchgeführt wird.

Bezugnehmend auf Figur 1 sendet das mobile Gerät eine Authentisierungsanfrage für das breitbandige Funknetz an die Basisstation des schmalbandigen Funknetzes, was in der beigefügten Figur als Schmalbandfunk bezeichnet ist. Anschließend wird von der Basisstation des schmalbandigen Funknetzes eine Legitimationsaufforderung an das mobile Gerät geschickt, d.h. es wird ein Passwort für das breitbandige Funknetz angefordert. Nach dem Senden des Passworts an die Basisstation des schmalbandigen Funknetzes wird das Passwort von der Basisstation überprüft, wobei für den Fall eines gültigen Passworts von der Basisstation des schmalbandigen Funknetzes die für die Datenkommunikation über das breitbandige Funknetz erforderlichen Informationen zur Verfügung gestellt werden, wie beispielsweise eine Zufallsnummer zum Identifizieren der nachfolgenden gültigen Kommunikation (Session-Token) und/oder die Nummer des zu verwendenden Funkkanals und/oder die Werte der physikalischen Modulationsparameter und an das mobile Gerät gesendet werden, welches diese Informationen zur Konfiguration der nachfolgenden breitbandigen Kommunikation mit der Basisstation des breitbandigen Funknetzes verwendet, was in der beigefügten Figur als Breitbandfunk bezeichnet ist.

Die für die Datenkommunikation über das breitbandige Funknetz erforderlichen Informationen können von der Basisstation des schmalbandigen Funknetzes generiert werden oder in der Basisstation oder auf einem Server abgelegt sein und von der Basisstation abgerufen werden.

Die physikalischen Modulationsparameter sind abhängig von der jeweiligen Technologie des breitbandigen Funknetzes. Beispielsweise können die physikalischen Modulationsparameter definierte Spreizcodes sein.

Das schmalbandige und das breitbandige Funknetz kommunizieren auf einer höheren Ebene miteinander, so dass die für die Datenkommunikation über das breitbandige Funknetz erforderlichen Parameter, wie das Passwort, die für die Datenkommunikation über das breitbandige Funknetz erforderlichen Informationen und die Werte der physikalischen Modulationsparameter von der Basisstation des schmalbandigen Funknetzes an das Mobilteil übermittelt werden können. Durch die Kommunikation beider Funknetze wird zudem gewährleistet, dass das mobile Gerät in jeder einer Basisstation zugeordneten Zelle des breitbandigen Funknetzes bereits erwartet wird.

Ein beispielhaftes Szenario für eine solche Kommunikation auf einer höheren Ebene stellt ein zentraler Server dar, welcher sowohl das schmalbandige als auch das breitbandige Funknetz steuert. In der oben angeführten beispielhaften Sequenz für eine Authentisierung würde der Server beiden Funknetzen das Authentisierungs-Passwort bereitstellen.

Gegenstand der Figur 2 ist eine Authentisierung, bei der zur Erhöhung der Sicherheit die "key-exchange" Prozedur für die Kryptoschlüssel, die für die Verschlüsselung der Übertragung über das breitbandige Funknetz erforderlich sind, über das schmalbandige Funknetz durchgeführt wird. Diese Variante unterscheidet sich von der Variante gemäß Figur 1 dadurch, dass nach dem Senden des Passworts an die Basisstation des schmalbandigen Funknetzes und Überprüfung desselben, für den Fall eines gültigen Passworts von der Basisstation zusätzlich zu den der Zufallsnummer zum Identifizieren der nachfolgenden gültigen Kommunikation (Session-Token) und/oder zur Nummer des zu verwendenden Funkkanals und/oder zu den Werten der physikalischen Modulationsparameter die Kryptoinformationen, die für die Verschlüsselung der Übertragung über das breitbandige Funknetz erforderlich sind, an das mobile Gerät gesendet werden. Die Kryptoinformationen sind von dem jeweiligen Kryptoverfahren abhängig. Im einfachsten Fall wird als Kryptoinformation das Passwort übermittelt, mit welchem die Daten verschlüsselt werden.

Das hier vorgestellte Verfahren kann beispielsweise bei einem Funkboniersystem, insbesondere bei einem Funkboniersystem für die Gastronomie durchgeführt werden. Derartige Systeme weisen mehrere Mobilteile auf, die im Gastraum vom Servicepersonal bedient werden, beispielsweise um eine Bestellung an ein Computersystem weiterzuleiten. Gemäß der Erfindung ist bei derartigen Systemen vorgesehen, dass die Datenkommunikation der Mobilteile mit dem Computersystem des Funkboniersystems gemäß dem erfindungsgemäßen Verfahren erfolgt. Zu diesem Zweck weist das Funkboniersystem zumindest eine Basisstation eines schmalbandigen Funknetzes und mehrere Basisstationen eines breitbandigen Funknetzes auf.

Ferner kann das erfindungsgemäße Verfahren auch dann angewandt werden, wenn sich das mobile Gerät nicht bewegt und sich die Basisstationen des breitbandigen und/oder des schmalbandigen Funknetzes bewegen oder wenn sich das mobile Gerät und die Basisstationen des breitbandigen und/oder des schmalbandigen Funknetzes bewegen.

## Patentansprüche

1. Verfahren zum Steuern und Verwalten einer drahtlosen Verbindung zur Datenkommunikation zwischen einem mobilen Gerät und einem breitbandigen Funknetz, **dadurch gekennzeichnet, dass** die Anmeldung und die Authentisierung des mobilen Gerätes an den Basisstationen des breitbandigen Funknetzes über ein schmalbandiges Funknetz mit geringerer Datenrate und größerer Reichweite als das breitbandige Funknetz erfolgt.

2. Verfahren zum Steuern und Verwalten einer drahtlosen Verbindung zur Datenkommunikation zwischen einem mobilen Gerät und einem breitbandigen Funknetz nach Anspruch 1, **dadurch gekennzeichnet, dass** der erforderliche Antennen-/Kanalscan und die Anmeldung und Authentisierung des mobilen Gerätes bei den Basisstationen des breitbandigen Funknetzes vorab über das schmalbandige Funknetz erfolgen.

3. Verfahren zum Steuern und Verwalten einer drahtlosen Verbindung zur Datenkommunikation zwischen einem mobilen Gerät und einem breitbandigen Funknetz nach Anspruch 1 oder 2, **dadurch gekennzeichnet, dass** die "key-exchange" Prozedur für die Kryptoschlüssel, die für die Verschlüsselung der Übertragung über das breitbandige Funknetz erforderlich sind, über das schmalbandige Funknetz durchgeführt wird, wobei die verschlüsselte Datenübertragung über das breitbandige Funknetz erfolgt.

4. Verfahren zum Steuern und Verwalten einer drahtlosen Verbindung zur Datenkommunikation zwischen einem mobilen Gerät und einem breitbandigen Funknetz nach Anspruch 1, 2 oder 3, **dadurch gekennzeichnet, dass** Datenfragmente der über das breitbandige Funknetz zu übertragenden Daten ausgeschnitten und über das schmalbandige Funknetz übertragen werden, wobei die von beiden Funknetzen übertragenen Daten beim Empfänger wieder zusammengesetzt werden.

5. Verfahren zum Steuern und Verwalten einer drahtlosen Verbindung zur Datenkommunikation zwischen einem mobilen Gerät und einem breitbandigen Funknetz nach Anspruch 1, 2, 3 oder 4, **dadurch gekennzeichnet, dass** über das schmalbandige Funknetz Steuerungsinformationen übertragen werden, die der Übertragung der eigentlichen zu übertragenden Daten über das breitbandige Funknetz dienen.

6. Verfahren zum Steuern und Verwalten einer drahtlosen Verbindung zur Datenkommunikation zwischen einem mobilen Gerät und einem breitbandigen Funknetz nach Anspruch 1, 2, 3, 4 oder 5, **dadurch gekennzeichnet, dass** die Performance des breitbandigen Funknetzes über laufende, in vorgegebenen Zeitabständen durchgeführten Messungen anhand eines Vergleichs mit der im Wesentlichen konstanten Performance des schmalbandigen Funknetzes ermittelt wird, wobei für den Fall, dass die Performance des breitbandigen Funknetzes einen vorgegebenen Schwellenwert unterschreitet, die Datenübertragung sämtlicher zu übermittelnden Daten oder eines Teils der zu übermittelnden Daten über das schmalbandige Funknetz erfolgt, bis die Performance des breitbandigen Funknetzes einen vorgegebenen Schwellenwert überschreitet.

7. Verfahren zum Steuern und Verwalten einer drahtlosen Verbindung zur Datenkommunikation zwischen einem mobilen Gerät und einem breitbandigen Funknetz nach einem der vorangehenden Ansprüche, **dadurch gekennzeichnet, dass** das breitbandige Funknetz als WLAN-Funknetz nach einem der IEEE802.11 Standards ausgeführt ist, wobei das schmalbandige Funknetz als Funknetz über das ISM-Band ausgeführt ist.
